# EUROPÄISCHE PATENTANMELDUNG

(11) **EP 4 614 031 A1**
(43) Veröffentlichungstag der Anmeldung: **10.09.2025**
(21) Anmeldenummer: 25155184.2
(22) Anmeldetag: 31.01.2025
(51) Int. Cl.: F16H 63/40, B60C 23/00, F16H 63/50, F16F 15/00

(54) **TRAKTOR**

(30) Priorität: 05.03.2024 DE 102024106297
(71) Anmelder: CLAAS Selbstfahrende Erntemaschinen GmbH, 33428 Harsewinkel (DE)
(72) Erfinder: Schütze, Lars, 59302 Oelde (DE)
(74) Vertreter: Budach, Steffen

(57) **Zusammenfassung**

Die vorliegende Erfindung betrifft einen Traktor (1) mit einem Antriebsaggregat (8) und einem mit dem Antriebsaggregat (8) zusammenwirkenden Fahrgetriebe (10) zum Antrieb von an Achsen (2, 4) des Traktors (1) angeordneten Vorderrädern (3) und/oder Hinterrädern (5). Der Traktor (1) umfasst eine Steuereinrichtung (17) zur Ansteuerung des Antriebsaggregats (8) und des Fahrgetriebes (10). Der Traktor (1) ist dadurch gekennzeichnet, dass das Fahrgetriebe (10) eine Sensorik (16) zur Erfassung zumindest eines Betriebsparameters (B_{G}) des Fahrgetriebes (10) umfasst. Die Steuereinrichtung (17) ist dazu vorgesehen und eingerichtet, ein den Betriebsparameter (B_{G}) repräsentierendes Sensorsignal (S_{G}) von der Sensorik (16) des Fahrgetriebes (10) zu empfangen und Schwingungen (S_{P}) im Sensorsignal (S_{G}) zu detektieren, welche durch Fahrzeugschwingungen des Traktors (1) induziert werden. Die Steuereinrichtung (17) ist dazu vorgesehen und eingerichtet, bei detektieren Schwingungen (S_{P}) im Sensorsignal (S_{G}) das Antriebsaggregat (8) und/oder das Fahrgetriebe (10) zur Reduzierung der Fahrzeugschwingungen des Traktors (1) anzusteuern.

## Beschreibung

Die vorliegende Erfindung betrifft einen Traktor gemäß dem Oberbegriff des unabhängigen Patentanspruchs 1 sowie ein Verfahren zur Reduzierung von Fahrzeugschwingungen eines Traktors gemäß dem Oberbegriff des unabhängigen Patentanspruchs 15.

Bei Traktoren mit luftbereiften Rädern, insbesondere solchen mit hohen Antriebsleistungen, ist es bekannt, dass es bei der Bodenbearbeitung mit einem von dem Traktor gezogenen Anbaugerät zu einem Aufschwingen des Traktors, einem sogenannten "Power Hopping", kommen kann. Bei diesen Fahrzeugschwingungen handelt es sich um im Wesentlichen vertikale Fahrzeugschwingungen, die der Vorwärtsbewegung des Traktors überlagert sind. Insbesondere bei Traktoren mit Allradantrieb, welche Anbaugeräte mit mittlerem bis hohem Zugkraftbedarf auf einem trockenen Boden ziehen, tritt dieses Phänomen häufig auf, welches seine Ursache in einer Durchbiegung und Rückfederung der Seitenwände des Reifens und einer damit einhergehenden Änderung der Traktion des Reifens findet. Die zunächst als Vibrationen wahrnehmbaren vertikalen Fahrzeugschwingungen können aufgrund des Phänomens fortschreitend ansteigen, wodurch es zu einer starken Reduzierung der Bodenhaftung des Traktors und damit zu einer starken Reduzierung der auf den Boden übertragbaren Kräfte kommt, der Traktor beginnt mit zunehmenden Fahrzeugschwingungen an den Bodenkontakt zeitweise zu verlieren, wodurch sich der Traktor springend bewegt.

"Power Hopping" ist sehr unangenehm für den Bediener des Traktors, der sich in der Kabine befindet. Weiterhin kann man "Power Hopping" dahingehend als nachteilig ansehen, dass die verschiedenen Aggregate des Traktors aufgrund der Fahrzeugschwingungen höheren Belastungen ausgesetzt sind und der Traktor insgesamt somit einem höheren Verschleiß unterliegt, was zu einem frühzeitigeren Versagen führen kann. "Power Hopping" führt zudem auch zu einer starken Schwankung der Zugkraft. Dies wiederum wirkt sich sehr nachteilig auf die mit dem Traktor durchzuführende Arbeit, insbesondere das Arbeitsergebnis, aus.

Ein üblicher zur Vermeidung von Vibrationen bzw. Schwingungen an Reifen und zur Sicherstellung einer hinreichend hohen und stabilen Zugkraft zu verändernder Betriebsparameter des Traktors ist der Luftdruck der Reifen. Aus der EP 2 583 543 A1 ist beispielsweise ein landwirtschaftliches Fahrzeug mit einer elektropneumatische Reifendruckregelanlage bekannt, durch welche eine Optimierung zwischen Zugkraft, Schlupf und Reifendruck ermöglicht wird. Dabei ist vorgesehen, den Reifendruck anhand von gemittelten Werten aus der Arbeitstiefenregelung oder Schlupfregelung den herrschenden Bedingungen optimal anzupassen, indem der Reifendruck situationsbedingt erhöht oder verringert wird, während sich bei einer bestimmte Arbeitstiefe eines Anbaugeräts eine entsprechend der herrschenden Bedingungen zwischen Boden und Reifen bestimmte Zugkraft und/oder ein bestimmter Schlupf einstellt.

Die Einstellung des Luftdrucks der Reifen erlaubt zwar grundsätzlich Fahrzeugschwingungen zu reduzieren bzw. vollständig abzubauen und somit "Power Hopping" entgegenzuwirken, eine Änderung des Luftdrucks der Reifen bedarf in aller Regel jedoch einer gewissen Zeit und erfordert eine Unterbrechung des Arbeitsprozesses. Eine Unterbrechung senkt die Wirtschaftlichkeit des Arbeitsprozesses, sodass diese grundsätzlich vermieden werden sollten.

Ausgehend hiervon ist es demnach die Aufgabe der vorliegenden Erfindung die beschriebenen Nachteile des Standes der Technik auszuräumen und insbesondere einen Traktor anzugeben, welcher ein System umfasst, das erlaubt auf über die Reifen induzierte Fahrzeugschwingungen des Traktors, die zu "Power Hopping" führen, schnell zu reagieren und diese effizient zu reduzieren.

Diese Aufgabe wird erfindungsgemäß durch die Merkmale des unabhängigen Patentanspruchs 1 gelöst, wobei vorteilhafte Weiterbildungen des erfindungsgemäßen Traktors Gegenstand der entsprechenden abhängigen Patentansprüche 2 bis 14 sind.

Demnach betrifft die vorliegende Erfindung einen Traktor mit einem Antriebsaggregat zur Bereitstellung von Antriebsleistung und einem mit dem Antriebsaggregat zusammenwirkenden Fahrgetriebe zum Antrieb von an Achsen des Traktors angeordneten Vorderrädern und/oder Hinterrädern, wobei die Vorderräder und Hinterräder des Traktors von luftgefüllten Reifen gebildet werden. Der Traktor umfasst ferner eine Steuereinrichtung zur Ansteuerung des Antriebsaggregats und des Fahrgetriebes. Der Traktor ist dadurch gekennzeichnet, dass das Fahrgetriebe eine Sensorik zur Erfassung zumindest eines Betriebsparameters des Fahrgetriebes umfasst und die Steuereinrichtung dazu vorgesehen und eingerichtet ist, ein den Betriebsparameter repräsentierendes Sensorsignal von der Sensorik des Fahrgetriebes zu empfangen und Schwingungen im Sensorsignal zu detektieren, welche durch Fahrzeugschwingungen des Traktors induziert werden. Die Steuereinrichtung ist ferner dazu vorgesehen und eingerichtet ist, bei detektieren Schwingungen im Sensorsignal das Antriebsaggregat und/oder das Fahrgetriebe zur Reduzierung der Fahrzeugschwingungen des Traktors anzusteuern.

Durch die Kopplung von Rädern und Fahrgetriebe mittels des Antriebsstrangs werden die durch das Traktionsverhalten der Räder in gewissen Betriebssituationen bedingten Fahrzeugschwingungen, die zu "Power Hopping" führen, an das Fahrgetriebe und die in dem Fahrgetriebe vorhandenen Komponenten übertragen. Durch die Auswertung eines Betriebsparameters des Fahrgetriebes im Hinblick auf Schwingungen, die durch solche Fahrzeugschwingungen des Traktors induziert werden, und die Ansteuerung von Antriebsaggregat und/oder Fahrgetriebe bei einer Detektion von solchen Schwingungen im Sensorsignal wird es möglich "Power Hopping" bereits in einem sehr frühen Stadium zu detektieren und entsprechend frühzeitig Maßnahmen durch Ansteuerung der zuvor genannten Aggregate des Traktors zu ergreifen, um die für "Power Hopping" ursächlichen Fahrzeugschwingungen zu reduzieren bzw. vollständig abzubauen und somit ein Aufschwingen des Traktors zu vermeiden.

Gemäß einer vorteilhaften Weiterbildung der Erfindung ist vorgesehen, dass die Steuereinrichtung dazu vorgesehen und eigerichtet ist, durch Ansteuerung des Antriebsaggregats das von dem Antriebsaggregat bereitgestellte Antriebsdrehmoment einzustellen.

Gemäß einer vorteilhaften Weiterbildung der Erfindung ist vorgesehen, dass die Steuereinrichtung dazu vorgesehen und eigerichtet ist, durch Ansteuerung des Fahrgetriebes das Übersetzungsverhältnis des Fahrgetriebes einzustellen.

Die Einstellung des vom Antriebsaggregat bereitgestellten Antriebsdrehmoments und/oder die Einstellung des Übersetzungsverhältnisses des Fahrgetriebes beeinflusst die den Achsen zugeführte Antriebsleistung. Hierdurch kann das Traktionsverhalten und somit das Schwingungsverhalten der Räder beeinflusst werden, welches maßgeblich ursächlich für das Auftreten der Fahrzeugschwingungen ist, welche zu "Power Hopping" führen.

Gemäß einer vorteilhaften Weiterbildung der Erfindung ist vorgesehen, dass das Fahrgetriebe als hydromechanisches Getriebe mit einem leistungsverzweigten mechanischen Getriebe und einem stufenlos verstellbaren hydrostatischen Getriebe, das mit dem mechanischen Getriebe zusammenwirkt, ausgebildet ist, wobei das hydrostatische Getriebe eine als Pumpe wirkende hydrostatische Einheit und eine als Motor wirkende hydrostatische Einheit umfasst, die miteinander über Leitungen zur Übertragung von Leistung hydraulisch verbunden sind.

Vorzugsweise ist vorgesehen, dass die Sensorik des Fahrgetriebes einen Drucksensor umfasst, welcher dazu vorgesehen und eingerichtet ist, einen in den die hydrostatischen Einheiten miteinander verbindenden Leitungen wirkenden hydraulischen Druck als Betriebsparameter zu erfassen.

Die Auswertung des in den die hydrostatischen Einheiten miteinander verbindenden Leitungen herrschenden hydraulischen Drucks ist in besonderem Maße vorteilhaft zur Detektion von Schwingungen, die auf "Power Hopping" schließen lassen, da Fluide besonders sensibel auf Schwingungen reagieren und eine Auswertung somit besonders frühzeitig und präzise möglich ist.

Weiter vorzugsweise ist vorgesehen, dass die Steuereinrichtung dazu vorgesehen und eingerichtet ist, aus dem vom Drucksensor empfangenen den hydraulischen Druck repräsentierenden Sensorsignal ein das Abtriebsdrehmoment des Fahrgetriebes repräsentierendes Sensorsignal zu erzeugen.

Gemäß einer vorteilhaften Weiterbildung der Erfindung ist vorgesehen, dass die Sensorik des Fahrgetriebes einen oder mehrere Drehmomentensensoren und/oder einen oder mehrere Drehzahlsensoren umfasst, welche dazu vorgesehen und eingerichtet sind, im Fahrgetriebe vorliegende Drehmomente und/oder Drehzahlen zu erfassen.

Vorzugsweise ist vorgesehen, dass die Steuereinrichtung dazu vorgesehen und eingerichtet ist, aus den von den Drehmomentensensoren und/oder Drehzahlsensoren empfangenen Drehmomente und/oder Drehzahlen repräsentierenden Sensorsignalen ein das Abtriebsdrehmoment des Fahrgetriebes repräsentierendes Sensorsignal zu erzeugen.

Die Nutzung von Drehmomentensensoren und/oder Drehzahlsensoren, um ein Abtriebsdrehmoment des Fahrgetriebes auszuwerten, erlaubt es die erfindungsgemäße Lösung auch bei Nutzung anderer Getriebetypen, die kein hydrostatisches Getriebe umfassen, beispielsweise Lastschaltgetriebe, anzuwenden.

Gemäß einer vorteilhaften Weiterbildung der Erfindung ist vorgesehen, dass der Traktor ein den Betrieb des Traktors optimierendes Fahrerassistenzsystem umfasst, wobei das Fahrerassistenzsystem die Steuereinrichtung umfasst.

Vorzugsweise ist vorgesehen, dass das Fahrerassistenzsystem dazu vorgesehen und eingerichtet ist, bei einer detektierten Schwingung im Sensorsignal eine automatische Ansteuerung des Antriebsaggregats und/oder des Fahrgetriebes durch die Steuereinrichtung zu veranlassen.

Weiter vorzugsweise ist vorgesehen, dass das Fahrerassistenzsystem eine Bedien- und Anzeigeeinheit umfasst und dazu vorgesehen und eingerichtet ist, bei einer detektierten Schwingung im Sensorsignal einem Bediener des Traktors dialogbasiert über die Bedien- und Anzeigeeinheit eine Empfehlung zur Ansteuerung des Antriebsaggregats und/oder des Fahrgetriebes durch die Steuereinrichtung anzuzeigen.

Die Nutzung eines Fahrerassistenzsystems, welches entweder die Ansteuerung automatisch veranlasst oder aber einem Bediener eine Empfehlung angibt und diesen dialogbasiert zwecks Entscheidungsfindung einbindet, erlaubt es den Bediener in erheblichem Maße zu entlasten und verbessert das Arbeitsergebnis. Insbesondere Bediener, die wenig Erfahrung in der Einstellung und Bedienung eines Traktors besitzen, können mittels des Fahrerassistenzsystems in besonderem Maße unterstützt werden und, trotz eines geringeren Erfahrungsschatzes, eine optimale Einstellung des Traktors vornehmen, die "Power Hopping" im Betrieb effektiv unterbindet.

Gemäß einer vorteilhaften Weiterbildung der Erfindung ist vorgesehen, dass die Steuereinrichtung dazu vorgesehen und eingerichtet ist, bei detektieren Schwingungen im Sensorsignal eine Reifendruckregelanlage des Traktors zur Einstellung eines Reifendrucks mindestens eines Reifens zur Reduzierung der Fahrzeugschwingungen des Traktors anzusteuern.

Vorzugsweise ist vorgesehen, dass das Fahrerassistenzsystem dazu vorgesehen und eingerichtet ist, bei einer detektierten Schwingung im Sensorsignal eine automatische Ansteuerung der Reifendruckregelanlage durch die Steuereinrichtung zu veranlassen.

Weiter vorzugsweise ist vorgesehen, dass das Fahrerassistenzsystem dazu vorgesehen und eingerichtet ist, bei einer detektierten Schwingung im Sensorsignal dem Bediener des Traktors dialogbasiert über die Bedien- und Anzeigeeinheit eine Empfehlung zur Ansteuerung Reifendruckregelanlage durch die Steuereinrichtung anzuzeigen.

Die Möglichkeit neben einer Ansteuerung von Antriebsaggregat und/oder Fahrgetriebe auch die Reifendruckregelanlage zur Einstellung eines Reifendrucks bei der Detektion von Schwingungen im Sensorsignal anzusteuern, sorgt für eine noch effektivere Reduzierung bzw. dem vollständigen Abbau von Fahrzeugschwingungen, welche zu "Power Hopping" führen. Insbesondere kann hierdurch vermieden werden, dass während des Betriebs des Traktors auf dem Feld eine ständige Anpassung von Parametern des Antriebsaggregats und/oder des Fahrgetriebes durchgeführt wird, die zu Schwankungen im Arbeitsergebnis führen könnte. Vielmehr kann durch die zusätzliche Anpassung der Reifendrücke eine vorausschauende Einstellung erfolgen, welche "Power Hopping" während der gesamten Durchführung der Arbeitsaufgabe effektiv reduziert bzw. vermeidet.

Gemäß einer vorteilhaften Weiterbildung der Erfindung ist vorgesehen, dass das Fahrerassistenzsystem dazu vorgesehen und eingerichtet ist, bei einer detektierten Schwingung im Sensorsignal dem Bediener des Traktors dialogbasiert über die Bedien- und Anzeigeeinheit eine Empfehlung zur Einstellung einer Ballastierung des Traktors anzuzeigen.

Auch hierdurch, wie bei einer Ansteuerung einer Reifendruckregelanlage zur Anpassung der Reifendrücke, kann durch eine, zusätzlich zur Ansteuerung des Antriebsaggregats und/oder des Fahrgetriebes, Anpassung der Ballastierung des Traktors eine noch effektivere und vorausschauende Reduzierung bzw. vollständiger Abbau von Fahrzeugschwingungen, welche zu "Power Hopping" führen, erzielt werden.

Die erfindungsgemäße Aufgabe wird ferner durch ein Verfahren zur Reduzierung von Fahrzeugschwingungen eines Traktors gemäß dem unabhängigen Patentanspruch 15 gelöst.

Demnach betrifft die vorliegende Erfindung weiterhin ein Verfahren zur Reduzierung von Fahrzeugschwingungen eines Traktors mit einem Antriebsaggregat zur Bereitstellung von Antriebsleistung, einem mit dem Antriebsaggregat zusammenwirkenden Fahrgetriebe zum Antrieb von an Achsen des Traktors angeordneten Vorderrädern und/oder Hinterrädern, wobei die Vorderräder und Hinterräder des Traktors von luftgefüllten Reifen gebildet werden, und einer Steuereinrichtung zur Ansteuerung des Antriebsaggregats und des Fahrgetriebes. Das Verfahren ist dadurch gekennzeichnet, dass eine Sensorik des Fahrgetriebes zumindest einen Betriebsparameter des Fahrgetriebes erfasst und die Steuereinrichtung ein den Betriebsparameter repräsentierendes Sensorsignal von der Sensorik des Fahrgetriebes empfängt und Schwingungen im Sensorsignal detektiert, welche durch Fahrzeugschwingungen des Traktors induziert werden. Die Steuereinrichtung steuert bei detektieren Schwingungen im Sensorsignal das Antriebsaggregat und/oder das Fahrgetriebe zur Reduzierung der Fahrzeugschwingungen des Traktors an.

Die Merkmale der abhängigen Patentansprüche 2 bis 14 sind gleichermaßen auf das erfindungsgemäße Verfahren übertragbar.

Die vorliegende Erfindung wird nachstehend anhand der in den Figuren abgebildeten Ausführungsformen näher beschrieben.

Es zeigen:
- FIG. 1: eine schematische und exemplarische Darstellung eines erfindungsgemäßen Traktors; und
- FIG. 2: einen schematischen und exemplarischen Graphen, welcher ein Sensorsignal darstellt, das einen hydraulischen Druck als Betriebsparameter eines Fahrgetriebes des erfindungsgemäßen Traktors gemäß FIG. 1 repräsentiert.

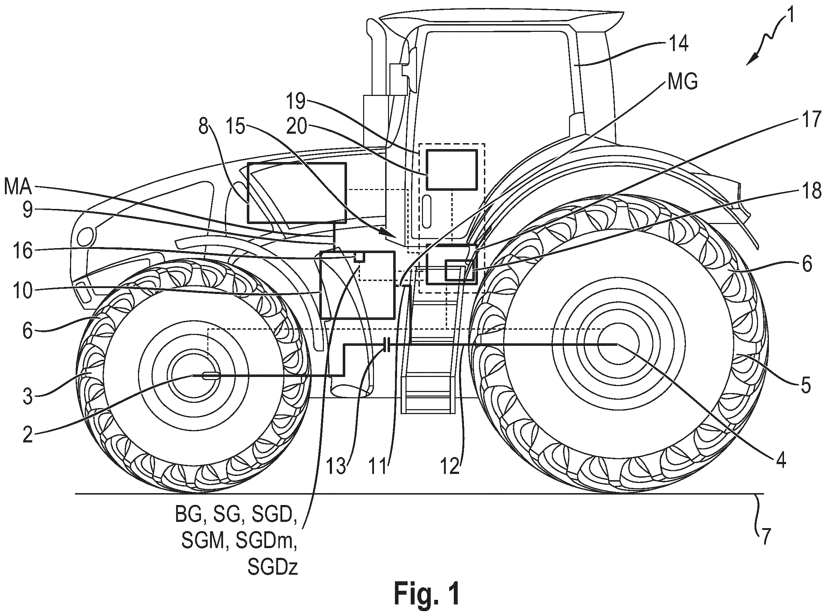

FIG. 1 zeigt einen erfindungsgemäßen Traktor 1 in einer schematischen und exemplarischen Darstellung, wobei der grundsätzliche Aufbau eines Traktors 1 als dem Fachmann bekannt angesehen wird.

Der Traktor 1 umfasst eine Vorderachse 2 und eine Hinterachse 3. Zumindest die Vorderachse 2 ist als lenkbare Achse ausgeführt. Der Traktor 1 umfasst mehrere an der Vorderachse 2 angeordnete Vorderräder 3 und mehrere an der Hinterachse 4 angeordnete Hinterräder 5. Die Vorderräder 3 und die Hinterräder 5 weisen dabei jeweils luftgefüllte Reifen 6 auf, welche mit dem Boden 7, insbesondere zur Übertragung von Antriebskräften, in Eingriff stehen. Des Weiteren umfasst der Traktor 1 ein Antriebsaggregat 8, welches vorzugsweise als ein Verbrennungsmotor ausgeführt ist, und zur Bereitstellung von Antriebsleistung dient. Das Antriebsaggregat 8 ist durch eine Antriebswelle 9 mit einem Fahrgetriebe 10 verbunden, sodass das Antriebsaggregat 8 und das Fahrgetriebe 10 zum Antrieb der Achsen 2, 4 zusammenwirken. Über die Antriebswelle 9 wird die von dem Antriebsaggregat 8 bereitgestellte Antriebsleistung an das Fahrgetriebe 10 übertragen. Das Fahrgetriebe 10 ist durch eine Abtriebswelle 11 mit einem Antriebsstrang 12 verbunden, welcher der Übertragung eines von dem Fahrgetriebe 10 übersetzten Drehmomentes und der Drehzahl wahlweise auf die Vorderachse 2 und/oder die Hinterachse 4 und somit die daran angeordneten Räder 3, 5 dient. Bevorzugt wird zumindest die Hinterachse 4 angetrieben. Der die Vorderachse 2 und die Hinterachse 4 verbindende Antriebsstrang 12 ist durch eine schaltbare Kupplung 13 unterbrechbar, so dass wahlweise nur die Hinterachse 4 oder im Allradbetrieb die Vorderachse 2 und die Hinterachse 4 durch das Antriebsaggregat 8 antreibbar sind.

Zum Ziehen eines - in den FIGs. nicht dargestellten - landwirtschaftlichen Anbaugeräts umfasst der Traktor 1 eine - in den FIGs. nicht dargestellte - heckseitige Anbauvorrichtung. Die Anbauvorrichtung kann beispielsweise als Dreipunktkraftheber oder aber auch als Zugpendel ausgeführt sein. Bei der Bearbeitung des Bodens 7 kann es mit luftgefüllten Reifen 6, insbesondere bei einem trockenen Boden 7 und einem mittleren bis hohen Zugkraftbedarf, zu einem Aufschwingen des Traktors 1 in vertikaler Richtung kommen. Diese Fahrzeugschwingungen sind auch, wie eingangs geschildert, unter dem Begriff "Power Hopping" bekannt. Neben den in vertikaler Richtung auftretenden Fahrzeugschwingungen können auch Fahrzeugschwingungen in horizontaler Richtung überlagert vorliegen, solche Fahrzeugschwingungen liegen jedoch im Vergleich zu den Fahrzeugschwingungen in vertikaler Richtung in einem erheblich geringeren Maße vor. Die Fahrzeugschwingungen können nicht nur für einen sich zur Steuerung des Traktors 1 in einer Kabine 14 des Traktors 1 befindenden Bediener unangenehm werden, sondern führen auch zu Beschädigungen am Traktor 1 und/oder dem angehängten Anbaugerät.

Um diesen im Betrieb des Traktors 1 auftretenden Herausforderungen zu begegnen, umfasst der Traktor 1 ein System 15, welches dazu vorgesehen und eingerichtet ist, Fahrzeugschwingungen des Traktors 1 zu detektieren und durch Ansteuerung von Aggregaten des Traktors 1 zu reduzieren, vorzugsweise gänzlich zu unterbinden bzw. abzubauen. Als Bestandteil des Systems 15 umfasst das Fahrgetriebe 10 eine Sensorik 16 zur Erfassung zumindest eines Betriebsparameters B_{G} des Fahrgetriebes 10. Weiterer Bestandteil des Systems 15 ist eine Steuereinrichtung 17 des Traktors 1. Diese Steuereinrichtung 17 ist zur Ansteuerung der verschiedenen Aggregate des Traktors 1, zumindest des Antriebsaggregats 8 und des Fahrgetriebes 10, vorgesehen und eingerichtet. Die Steuereinrichtung 17 des Traktors 1 ist dazu vorgesehen und eingerichtet, ein den Betriebsparameter B_{G} des Fahrgetriebes 10 repräsentierendes Sensorsignal S_{G}, welches von der Sensorik 16 bereitgestellt wird, von der Sensorik 16 zu empfangen. Die Steuereinrichtung 17 verarbeitet das Sensorsignal S_{G} und wertet das Sensorsignal S_{G} im Hinblick auf vorliegende Schwingungen S_{P} im Sensorsignal S_{G} aus, welche auf Fahrzeugschwingungen des Traktors 1, also "Power Hopping", hindeuten bzw. durch solche induziert werden. Sofern die Steuereinrichtung 17 solche Schwingungen S_{P} im Sensorsignal S_{G} detektiert, ist sie dazu vorgesehen und eingerichtet, das Antriebsaggregat 8 und/oder das Fahrgetriebes 10 zur Reduzierung der Fahrzeugschwingungen des Traktors 1 anzusteuern. Sofern das Antriebsaggregat 8 von der Steuereinrichtung 17 angesteuert wird, stellt die Steuereinrichtung 17 vorzugsweise das von dem Antriebsaggregat 8 zum Antrieb der an den Achsen 2, 4 angeordneten Räder 3, 5 bereitgestellte Antriebsdrehmoment M_{A} ein. Sofern das Fahrgetriebe 10 von der Steuereinrichtung 17 angesteuert wird, stellt die Steuereinrichtung 17 vorzugsweise das Übersetzungsverhältnis des Fahrgetriebes 10 ein. Die von der Steuereinrichtung 17 einstellbaren Parameter des Antriebsaggregats 8 und/oder des Fahrgetriebes 10 beeinflussen unmittelbar die den Achsen 2, 4 und somit den daran angeordneten Rädern 3, 5 zugeführte Antriebsleistung aufgrund der Kopplung von Antriebsaggregat 8 und Fahrgetriebes 10 über den Antriebsstrang 12 mit den Achsen 2, 4. Eine Veränderung der Antriebsleistung beeinflusst wiederum die Traktion der Räder 3, 5, wodurch das Schwingungsverhalten der Räder 3, 5 in dem Sinne beeinflusst wird, dass sich die Fahrzeugschwingungen des Traktors 1 reduzieren bzw. gänzlich abbauen.

In einer bevorzugten Ausführungsform des erfindungsgemäßen Traktors 1 ist das Fahrgetriebe 10 als hydromechanisches Getriebe ausgebildet, wobei der grundsätzliche Aufbau als dem Fachmann bekannt angesehen wird. Kurzum umfasst das hydromechanische Getriebe ein leistungsverzweigtes mechanisches Getriebe sowie ein damit wirkverbundenes stufenlos verstellbares hydrostatisches Getriebe. Ein solches hydromechanisches Getriebe ermöglicht eine stufenlos einstellbare Übersetzung zwischen einer Getriebeeingangswelle, welche mit der Antriebswelle 9 des Antriebsaggregats 8 gekoppelt ist, und der Abtriebswelle 11, welche das hydromechanische Getriebe mit dem Antriebsstrang 12 und somit mit den Achsen 2, 3 koppelt. Das hydrostatische Getriebe überträgt die Antriebsleistung dabei, indem eine als Pumpe wirkende hydrostatische Einheit mit einer als Motor wirkenden hydrostatischen Einheit über Leitungen hydraulisch verbunden ist.

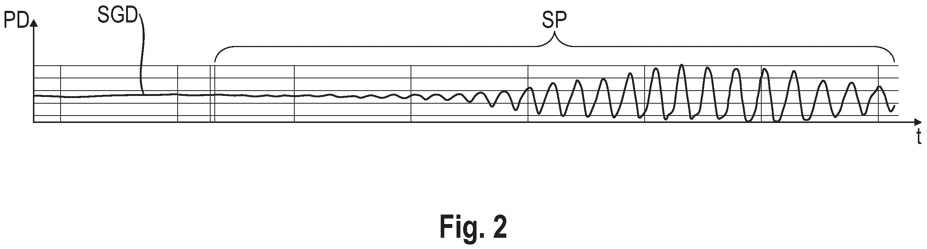

Sofern das Fahrgetriebe 10 als hydromechanischen Getriebe ausgebildet ist, umfasst die Sensorik 16 des Fahrgetriebes 10 einen Drucksensor. Der Drucksensor ist dazu vorgesehen und eingerichtet, eine in denen die hydrostatischen Einheiten miteinander verbinden Leitungen wirkenden hydraulischen Druck P_{D} als Betriebsparameter B_{GD} des Fahrgetriebes 10 zu erfassen und ein entsprechendes den hydraulischen Druck P_{D} repräsentierendes Sensorsignal S_{GD} an die Steuereinrichtung 17 zu übermitteln. Die Steuereinrichtung 17 empfängt das von dem Drucksensor übermittelte den hydraulischen Druck P_{D} repräsentierende Sensorsignal S_{GD}, welches schematisch und exemplarisch in FIG. 2 in einem Graph mit y-Achse Druck P_{D} und x-Achse Zeit t dargestellt ist. Die Steuereinrichtung 17 verarbeitet dieses Sensorsignal S_{GD} und wertet dieses im Hinblick auf Schwingungen S_{P} im Sensorsignal S_{GD} aus. Sofern die Steuereinrichtung 17 Schwingungen, welche durch Fahrzeugschwingungen des Traktors 1 induziert werden, im Sensorsignal S_{GD} detektiert, steuert die Steuereinrichtung 17 das Antriebsaggregat 8 und/oder das Fahrgetriebes 10 zur Reduzierung der Fahrzeugschwingungen an, beispielsweise indem das vom Antriebsaggregat 8 bereitgestellte Antriebsdrehmoment M_{A} und/oder das Übersetzungsverhältnis des Fahrgetriebes 10 eingestellt wird. Dem zuvor beschriebenen Vorgehen kann ein weiterer optionaler Schritt zwischengeschaltet sein, der nachfolgend beschrieben wird, vorzugsweise werden allerdings die Schwingungen S_{P} unmittelbar in dem den hydraulischen Druck P_{D} repräsentierenden Sensorsignal S_{GD} von der Steuereinrichtung 17 detektiert. So ist es möglich, dass die Steuereinrichtung 17 aus dem vom Drucksensor empfangenen den hydraulischen Druck P_{D} repräsentierenden Sensorsignal S_{GD} zunächst ein das Abtriebsdrehmoment M_{G} des Fahrgetriebes 10 repräsentierende Sensorsignal S_{GM} erzeugt. Die Steuereinrichtung 17 verarbeitet dann anstelle des den hydraulischen Druck P_{D} repräsentierenden Sensorsignals S_{GD} dieses Sensorsignal S_{GM} und wertet es im Hinblick auf Schwingungen S_{P} im Sensorsignal S_{GM} aus. Sofern die Steuereinrichtung 17 Schwingungen S_{P} im Sensorsignal S_{GM} detektiert, steuert die Steuereinrichtung 17 das Antriebsaggregat 8 und/oder das Fahrgetriebes 10 entsprechend zur Reduzierung der Fahrzeugschwingungen an. Dass das Abtriebsdrehmoment M_{G} repräsentierende Sensorsignal S_{GM} kann von der Steuereinrichtung 17 unter Verwendung einer Rechenvorschrift, die in einer Speichereinrichtung 18 der Steuereinrichtung 17 oder einer mit der Steuereinrichtung 17 verbundenen Speichereinrichtung hinterlegt ist, erfolgen. Die Steuerrichtung 17 kann zur Anwendung der Rechenvorschrift auf weitere Betriebsparameter des Traktors 1 bzw. der Aggregate des Traktors 1 zurückgreifen, die mittels geeigneter Sensoren erfassbar sind.

Die Sensorik 16 des Fahrgetriebes 10 kann einen oder mehrere Drehmomentensensoren und/oder einen oder mehrere Drehzahlsensoren umfassen. Diese Sensoren sind dazu vorgesehen und eingerichtet, im Fahrgetriebe 10 vorliegende Drehmomente und/oder Drehzahlen zu erfassen und diese an die Steuereinrichtung 17 des Traktors 1 in Form von Drehmomente und/oder Drehzahlen repräsentierenden Sensorsignalen S_{GDm}, S_{GDz} zu übermitteln. Die Steuereinrichtung 17 ist wiederum dazu vorgesehen und eingerichtet, aus den von den Drehmomentensensoren und/oder Drehzahlsensoren empfangenen Sensorsignalen S_{GDm}, S_{GDz} ein das Abtriebsdrehmoment M_{G} repräsentierendes Sensorsignal S_{GM} zu erzeugen, wodurch die erfindungsgemäße Ausgestaltung auch auf andere Getriebetypen, beispielsweise Lastschaltgetriebe, anwendbar wird, welche kein hydrostatisches Getriebe umfassen. Die Steuereinrichtung 17 verarbeitet das Sensorsignal S_{GM} und wertet es entsprechend im Hinblick auf Schwingungen S_{P} im Sensorsignal S_{GM} aus. Sofern die Steuereinrichtung 17 Schwingungen, welche durch Fahrzeugschwingungen des Traktors 1 induziert werden, im Sensorsignal S_{GM} detektiert, steuert die Steuereinrichtung 17 das Antriebsaggregat 8 und/oder das Fahrgetriebe 10 entsprechend zur Reduzierung der Fahrzeugschwingungen an.

Der Traktor 1 kann weiterhin ein Fahrerassistenzsystem 19 umfassen, welches den Betrieb des Traktors 1 optimiert und die Steuereinrichtung 17 des Traktors 1 umfasst. Die mittels des Fahrerassistenzsystem 19 vorgenommenen Optimierungen können verschiedene Aspekte des Betriebs des Traktors 1 umfassen, wobei vorliegend allerdings die Reduzierung bzw. der vollständige Abbau der Fahrzeugschwingungen des Traktors 1 im Fokus liegt. Das Fahrerassistenzsystem 19 kann hierbei in zwei verschiedenen Betriebsmodi arbeiten. Zum einen kann das Fahrerassistenzsystem 19 in einem automatischen Betriebsmodus arbeiten. Hierbei veranlasst das Fahrerassistenzsystem 19 bei der Detektion von Schwingungen S_{P} im Sensorsignal S_{G} eine automatische Ansteuerung des Antriebsaggregats 8 und/oder des Fahrgetriebes 10 durch die Steuereinrichtung 17. Mit anderen Worten, sobald Schwingungen S_{P} im Sensorsignal S_{G} seitens der Steuereinrichtung 17 detektiert werden, steuert die Steuereinrichtung 17 das Antriebsaggregat 8 und/oder das Fahrgetriebe so an, dass die Fahrzeugschwingungen reduziert werden. Die Steuereinrichtung 17 stellt beispielsweise ohne Eingriff von außen ein Antriebsdrehmoment am Antriebsaggregat 8 und/oder ein Übersetzungsverhältnis des Fahrgetriebes 10 entsprechend so ein, dass der Zugkraftbedarf weiterhin hinreichend befriedigt wird, die Fahrzeugschwingungen allerdings reduziert bzw. gänzlich abgebaut werden. Zum anderen kann das Fahrerassistenzsystem 19 in einem dialogbasierten Betriebsmodus arbeiten, wobei das Fahrerassistenzsystem 19 hierbei eine Bedien- und Anzeigeeinheit 20 umfasst. Im dialogbasierten Betriebsmodus zeigt das Fahrerassistenzsystem 19 bei der Detektion von Schwingungen S_{P} im Sensorsignal S_{G} dem sich in der Kabine 14 befindenden Bediener des Traktors 1 dialogbasiert eine Empfehlung zur Ansteuerung des Antriebsaggregats 8 und/oder des Fahrgetriebes 10 über die Bedien- und Anzeigeeinheit 20 an. Diese Empfehlung kann der Bediener annehmen oder auch ablehnen. Bei einer Annahme der Empfehlung durch den Bediener über eine Interaktion mit der Bedien- und Anzeigeeinheit 20 steuert die Steuereinrichtung 17 das Antriebsaggregat 8 und/oder das Fahrgetriebe so an, dass die Fahrzeugschwingungen reduziert werden. Die Steuereinrichtung 17 stellt gemäß der seitens des Bedieners angenommenen Empfehlung beispielsweise ein Antriebsdrehmoment am Antriebsaggregat 8 und/oder ein Übersetzungsverhältnis des Fahrgetriebes 10 entsprechend so ein, dass der Zugkraftbedarf weiterhin hinreichend befriedigt wird, die Fahrzeugschwingungen allerdings reduziert bzw. gänzlich abgebaut werden.

Neben der Ansteuerung des Antriebsaggregats 8 und/oder des Fahrgetriebes zur Reduzierung von Fahrzeugschwingungen kann die Steuereinrichtung 17 auch dazu vorgesehen und eingerichtet sein, bei detektierten Schwingungen S_{P} im Sensorsignal S_{G} eine - in den FIGs. nicht dargestellte - Reifendruckregelanlage des Traktors 1 zur Einstellung eines Reifendrucks der luftgefüllten Reifen 6 anzusteuern. Auch hier ist es gleichermaßen, sofern das Fahrerassistenzsystem 19 vorgesehen ist, möglich, dass das Fahrerassistenzsystem 19 bei einer Detektion von Schwingungen S_{P} im Sensorsignal S_{G} einerseits in einem automatischen Betriebsmodus und andererseits in einem dialogbasierten Betriebsmodus arbeitet. Im automatischen Betriebsmodus veranlasst das Fahrerassistenzsystem 19 eine automatische Ansteuerung der Reifendruckregelanlage durch die Steuereinrichtung 17. Im dialogbasierten Betriebsmodus zeigt das Fahrerassistenzsystem 19 dem Bediener des Traktors 1 über die Bedien- und Anzeigeeinheit 20 dialogbasiert eine Empfehlung zur Ansteuerung der Reifendruckregelanlage durch die Steuereinrichtung 17 an. Bei Annahme der Empfehlung durch den Bediener stellt die Steuereinrichtung 17 den Reifendruck entsprechend ein. Neben der Anzeige einer Empfehlung zur Einstellung des Reifendrucks, kann das Fahrerassistenzsystem 19 bei einer detektierten Schwingung S_{P} im Sensorsignal S_{G} dem Bediener des Traktors 1 ferner dialogbasiert über die Bedien- und Anzeigeeinheit 20 eine Empfehlung zur Einstellung einer Ballastierung des Traktors 1 anzeigen. Der Bediener kann die Ballastierung dann entsprechend der Empfehlung, beispielsweise durch Hinzufügen oder Wegnehmen von Ballastgewichten, verändern.

Abschließend lässt sich das zuvor anhand der strukturellen Merkmale beschriebene Verfahren zur Reduzierung von Fahrzeugschwingungen des Traktors 1 grundsätzlich wie folgt zusammenfassen: Mittels der Sensorik 16 des Fahrgetriebes 10 wird zumindest ein Betriebsparameter B_{G} des Fahrgetriebes 10 erfasst. Die Steuereinrichtung 17 des Traktors 1 empfängt das den Betriebsparameter B_{G} repräsentierende Sensorsignal S_{G} von der Sensorik 16 und detektiert Schwingungen S_{P} im Sensorsignal S_{G}, welche durch Fahrzeugschwingungen des Traktors 1 induziert werden. Die Steuereinrichtung 17 steuert bei detektierten Schwingungen S_{P} im Sensorsignal S_{G} das Antriebsaggregat 8 und/oder das Fahrgetriebe 10 zur Reduzierung der Fahrzeugschwingungen an.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Traktor | S_{GD} | Sensorsignal hydraulischer Druck Fahrgetriebe |
| 2 | Vorderachse | | |
| 3 | Vorderrad | S_{GM} | Sensorsignal Abtriebsdrehmoment Fahrgetriebe |
| 4 | Hinterachse | S_{GDm} | Sensorsignal Drehmomente Fahrgetriebe |
| 5 | Hinterrad | | |
| 6 | Reifen | S_{GDz} | Sensorsignal Drehzahlen Fahrgetriebe |
| 7 | Boden | | |
| 8 | Antriebsaggregat | S_{P} | Schwingungen im Sensorsignal |
| 9 | Antriebswelle | M_{A} | Antriebsdrehmoment Antriebsaggregat |
| 10 | Fahrgetriebe | | |
| 11 | Abtriebswelle | M_{G} | Abtriebsdrehmoment Fahrgetriebe |
| 12 | Antriebsstrang | | |
| 13 | Kupplung | | |
| 14 | Kabine | | |
| 15 | System | | |
| 16 | Sensorik | | |
| 17 | Steuereinrichtung | | |
| 18 | Speichereinrichtung | | |
| 19 | Fahrerassistenzsystem | | |
| 20 | Bedien- und Anzeigeeinheit | | |
| B_{G} | Betriebsparameter Fahrgetriebe | | |
| P_{D} | Hydraulischer Druck | | |
| t | Zeit | | |
| S_{G} | Sensorsignal Sensorik Fahrgetriebe | | |

## Patentansprüche

1. Traktor (1) mit einem Antriebsaggregat (8) zur Bereitstellung von Antriebsleistung und einem mit dem Antriebsaggregat (8) zusammenwirkenden Fahrgetriebe (10) zum Antrieb von an Achsen (2, 4) des Traktors (1) angeordneten Vorderrädern (3) und/oder Hinterrädern (5), wobei die Vorderräder (3) und Hinterräder (5) des Traktors (1) von luftgefüllten Reifen (6) gebildet werden, wobei der Traktor (1) eine Steuereinrichtung (17) zur Ansteuerung des Antriebsaggregats (8) und des Fahrgetriebes (10) umfasst, **dadurch gekennzeichnet, dass** das Fahrgetriebe (10) eine Sensorik (16) zur Erfassung zumindest eines Betriebsparameters (B_{G}) des Fahrgetriebes (10) umfasst, wobei die Steuereinrichtung (17) dazu vorgesehen und eingerichtet ist, ein den Betriebsparameter (B_{G}) repräsentierendes Sensorsignal (S_{G}) von der Sensorik (16) des Fahrgetriebes (10) zu empfangen und Schwingungen (S_{P}) im Sensorsignal (S_{G}) zu detektieren, welche durch Fahrzeugschwingungen des Traktors (1) induziert werden, wobei die Steuereinrichtung (17) dazu vorgesehen und eingerichtet ist, bei detektieren Schwingungen (S_{P}) im Sensorsignal (S_{G}) das Antriebsaggregat (8) und/oder das Fahrgetriebe (10) zur Reduzierung der Fahrzeugschwingungen des Traktors (1) anzusteuern.

2. Traktor (1) nach Anspruch 1, **dadurch gekennzeichnet, dass** die Steuereinrichtung (17) dazu vorgesehen und eigerichtet ist, durch Ansteuerung des Antriebsaggregats (8) das von dem Antriebsaggregat (8) bereitgestellte Antriebsdrehmoment (M_{A}) einzustellen.

3. Traktor (1) nach Anspruch 1 oder 2, **dadurch gekennzeichnet, dass** die Steuereinrichtung (17) dazu vorgesehen und eigerichtet ist, durch Ansteuerung des Fahrgetriebes (10) das Übersetzungsverhältnis des Fahrgetriebes (10) einzustellen.

4. Traktor (1) nach einem der Ansprüche 1 bis 3, **dadurch gekennzeichnet, dass** das Fahrgetriebe (10) als hydromechanisches Getriebe mit einem leistungsverzweigten mechanischen Getriebe und einem stufenlos verstellbaren hydrostatischen Getriebe, das mit dem mechanischen Getriebe zusammenwirkt, ausgebildet ist, wobei das hydrostatische Getriebe eine als Pumpe wirkende hydrostatische Einheit und eine als Motor wirkende hydrostatische Einheit umfasst, die miteinander über Leitungen zur Übertragung von Leistung hydraulisch verbunden sind.

5. Traktor (1) nach Anspruch 4, **dadurch gekennzeichnet, dass** die Sensorik (16) des Fahrgetriebes (10) einen Drucksensor umfasst, welcher dazu vorgesehen und eingerichtet ist, einen in den die hydrostatischen Einheiten miteinander verbindenden Leitungen wirkenden hydraulischen Druck (P_{D}) als Betriebsparameter (B_{G}) zu erfassen.

6. Traktor (1) nach Anspruch 5, **dadurch gekennzeichnet, dass** die Steuereinrichtung (17) dazu vorgesehen und eingerichtet ist, aus dem vom Drucksensor empfangenen den hydraulischen Druck (P_{D}) repräsentierenden Sensorsignal (S_{GD}) ein das Abtriebsdrehmoment (M_{G}) des Fahrgetriebes (10) repräsentierendes Sensorsignal (S_{GM}) zu erzeugen.

7. Traktor (1) nach einem der Ansprüche 1 bis 6, **dadurch gekennzeichnet, dass** die Sensorik (16) des Fahrgetriebes (10) einen oder mehrere Drehmomentensensoren und/oder einen oder mehrere Drehzahlsensoren umfasst, welche dazu vorgesehen und eingerichtet sind, im Fahrgetriebe (10) vorliegende Drehmomente und/oder Drehzahlen zu erfassen.

8. Traktor (1) nach Anspruch 7, **dadurch gekennzeichnet, dass** die Steuereinrichtung (17) dazu vorgesehen und eingerichtet ist, aus den von den Drehmomentensensoren und/oder Drehzahlsensoren empfangenen Drehmomente und/oder Drehzahlen repräsentierenden Sensorsignalen (S_{GDm}, S_{GDz}) ein das Abtriebsdrehmoment (M_{G}) des Fahrgetriebes (10) repräsentierendes Sensorsignal (S_{GM}) zu erzeugen.

9. Traktor (1) nach einem der Ansprüche 1 bis 8, **dadurch gekennzeichnet, dass** der Traktor (1) ein den Betrieb des Traktors (1) optimierendes Fahrerassistenzsystem (19) umfasst, wobei das Fahrerassistenzsystem (19) die Steuereinrichtung (17) umfasst.

10. Traktor (1) nach Anspruch 9, **dadurch gekennzeichnet, dass** das Fahrerassistenzsystem (19) dazu vorgesehen und eingerichtet ist, bei einer detektierten Schwingung (S_{P}) im Sensorsignal (S_{G}) eine automatische Ansteuerung des Antriebsaggregats (8) und/oder des Fahrgetriebes (10) durch die Steuereinrichtung (17) zu veranlassen.

11. Traktor (1) nach Anspruch 9 oder 10, **dadurch gekennzeichnet, dass** das Fahrerassistenzsystem (19) eine Bedien- und Anzeigeeinheit (20) umfasst und dazu vorgesehen und eingerichtet ist, bei einer detektierten Schwingung (S_{P}) im Sensorsignal (S_{G}) einem Bediener des Traktors (1) dialogbasiert über die Bedien- und Anzeigeeinheit (20) eine Empfehlung zur Ansteuerung des Antriebsaggregats (8) und/oder des Fahrgetriebes (10) durch die Steuereinrichtung (17) anzuzeigen.

12. Traktor (1) nach einem der Ansprüche 1 bis 11, **dadurch gekennzeichnet, dass** die Steuereinrichtung (17) dazu vorgesehen und eingerichtet ist, bei detektieren Schwingungen (S_{P}) im Sensorsignal (S_{G}) eine Reifendruckregelanlage des Traktors (1) zur Einstellung eines Reifendrucks mindestens eines Reifens (6) zur Reduzierung der Fahrzeugschwingungen des Traktors (1) anzusteuern.

13. Traktor (1) nach Anspruch 12 in Kombination mit Anspruch 10 oder 11, **dadurch gekennzeichnet, dass** das Fahrerassistenzsystem (19) dazu vorgesehen und eingerichtet ist, bei einer detektierten Schwingung (S_{P}) im Sensorsignal (S_{G}) eine automatische Ansteuerung der Reifendruckregelanlage durch die Steuereinrichtung (17) zu veranlassen, und/oder das Fahrerassistenzsystem (19) dazu vorgesehen und eingerichtet ist, bei einer detektierten Schwingung (S_{P}) im Sensorsignal (S_{G}) dem Bediener des Traktors (1) dialogbasiert über die Bedien- und Anzeigeeinheit (20) eine Empfehlung zur Ansteuerung Reifendruckregelanlage durch die Steuereinrichtung (17) anzuzeigen.

14. Traktor (1) nach Anspruch 11 oder Anspruch 11 in Kombination mit Anspruch 12 oder 13, **dadurch gekennzeichnet, dass** das Fahrerassistenzsystem (19) dazu vorgesehen und eingerichtet ist, bei einer detektierten Schwingung (S_{P}) im Sensorsignal (S_{G}) dem Bediener des Traktors (1) dialogbasiert über die Bedien- und Anzeigeeinheit (20) eine Empfehlung zur Einstellung einer Ballastierung des Traktors (1) anzuzeigen.

15. Verfahren zur Reduzierung von Fahrzeugschwingungen eines Traktors (1) mit einem Antriebsaggregat (8) zur Bereitstellung von Antriebsleistung, einem mit dem Antriebsaggregat (8) zusammenwirkenden Fahrgetriebe (10) zum Antrieb von an Achsen (2, 4) des Traktors (1) angeordneten Vorderrädern (3) und/oder Hinterrädern (5), wobei die Vorderräder (3) und Hinterräder (5) des Traktors (1) von luftgefüllten Reifen (6) gebildet werden, und einer Steuereinrichtung (17) zur Ansteuerung des Antriebsaggregats (8) und des Fahrgetriebes (10), **dadurch gekennzeichnet, dass** eine Sensorik (16) des Fahrgetriebes (10) zumindest einen Betriebsparameter (B_{G}) des Fahrgetriebes (10) erfasst, wobei die Steuereinrichtung (10) ein den Betriebsparameter (B_{G}) repräsentierendes Sensorsignal (S_{G}) von der Sensorik (16) des Fahrgetriebes (10) empfängt und Schwingungen (S_{P}) im Sensorsignal (S_{G}) detektiert, welche durch Fahrzeugschwingungen des Traktors (1) induziert werden, wobei die Steuereinrichtung (17) bei detektieren Schwingungen (S_{P}) im Sensorsignal (S_{G}) das Antriebsaggregat (8) und/oder das Fahrgetriebe (10) zur Reduzierung der Fahrzeugschwingungen des Traktors (1) ansteuert.
